# EUROPEAN PATENT SPECIFICATION

(11) **EP 3 265 725 B1**
(45) Date of publication and mention of the grant of the patent: **11.08.2021**
(21) Application number: 16713586.2
(22) Date of filing: 22.02.2016
(51) Int. Cl.: F24D 11/00, F24D 15/02, F24H 1/20, F24H 9/00, F24H 9/06, F24H 9/14, F02G 5/04, F28D 7/10, F28D 1/06, F28D 21/00, F28D 20/00, F28D 1/02, F28D 7/00, F28D 7/02, F28D 7/12

(54) **DEVICE AND METHOD FOR THE COGENERATION OF ELECTRICAL ENERGY AND THERMAL ENERGY**
VORRICHTUNG UND VERFAHREN ZUR ERZEUGUNG VON ELEKTRISCHER ENERGIE UND WÄRME
DISPOSITIF ET PROCEDE DE GENERATION D'ENERGIE ELECTRIQUE ET ENERGIE THERMIQUE

(30) Priority: 06.03.2015 IT MO20150049
(43) Date of publication of application: 10.01.2018
(73) Proprietor: Gogogen S.r.l., 43123 Parma (PR) (IT)
(72) Inventor: RIVARA, Marco, 43123 Parma (IT)
(74) Representative: Brunacci, Marco
(86) International application number: PCT/IB2016/050941
(87) International publication number: WO 2016/142795

(56) References cited:
- DE-A1-102007 063 141
- JP-A- H07 238 866
- JP-A- S61 101 740

## Description

### Technical Field

The present invention relates to a device for the cogeneration of electric energy and thermal energy, according to the preamble of claim 1.

### Background Art

Cogeneration devices are known which provide for the installation of several elements and/or units for the combined production of electric energy and thermal energy.

In particular, the known cogeneration devices currently on the market comprise motor means that exploit the changes in pressure and temperature generated by combustion processes to produce thermal energy and mechanical energy, with the latter convertible into electric energy by means of an alternator.

In the "small size" devices, in particular with rated electric powers not exceeding 25 kWe, the motor means most commonly used are of the internal combustion type, even though there are other types such as "Stirling engines" and microturbines.

As is known, the production of electric energy is obtained by transforming the mechanical energy of the rotary motion of a shaft kinematically connected to the motor piston, while the production of thermal energy is obtained by transferring heat to a heat transfer fluid able to exchange heat with three different sources, i.e., with the exhaust fumes, with the motor coolant fluid and with the motor lubricant.

Usually, the heat transfer fluid which has acquired thermal energy is used for the production of heat to be supplied to a heating unit, e.g. to produce domestic hot water and to heat home environments.

In the known solutions the heat transfer fluid circulates in closed pipe systems which connect the device to an external thermal unit wherein the heat transfer fluid transfers heat to other fluids (water, air, etc.) used to operate the heating, cooling systems, etc.

One drawback of the known devices is that the thermal unit is external to the device itself, with consequent loss of thermal energy along the path covered by the fluid to reach the thermal unit itself and a reduction in overall thermal efficiency.

Furthermore, having an external thermal unit entails the use of at least two circulators, one for circulating a fluid from the motor to the thermal unit and another for circulating the water from the thermal unit to the user point, with consequent increase in energy consumption.

Another drawback related to the fact that the thermal unit is external to the device regards the reduced flexibility in positioning the device itself. The known devices, in fact, cannot be placed in any point of a building, of a container structure, etc., but must be placed in specific points so that connection is possible with the thermal unit and maintenance and other special jobs are made possible.

Not least, the devices of known type are particularly bulky, mainly having a horizontal extension which achieves important lengths when compared to the environments in which they are located.

Other cogeneration devices are known from DE 10 2009 010834, EP 2456290, US 4657290 and WO 99/40310.

DE 10 2009 010834 describes a device comprising a generator assembly above which a tank is placed, not under pressure, containing the motor coolant fluid. EP 2456290 describes a cogeneration device comprising a generator assembly, a motor element arranged below the generator and a heat exchanger which is also placed below the generator and able to exploit the heat produced by the motor element.

US 4657290 describes a cogeneration device, having a generator assembly immersed inside a tank, not under pressure, of the open-vessel type and containing a heat transfer fluid.

WO 99/40310 describes a device having a generator assembly placed on the top of a storage tank and which is covered (the generator assembly) by a casing able to protect it from the heat transfer fluid contained in the tank itself.

JP H07 238866A which describes a co-generation unit according to the preamble of claim 1, discloses an engine 1 recovered from a scrapped automobile which is remodeled so that it can be driven with town gas or propane gas as fuel. A gas piping 2 for supplying the town gas to the reused engine 1 and a water jacket 3 around a cylinder in the engine 1 are provided. A clean water branching pipe 4 branched from a clean water supply pipe 11 to supply the clean water through a valve 5 into the water jacket 3 and a generator G connected to a drive shaft of the output shaft of the engine 1 are provided. An exhaust pipe 8 of the engine 1 provided with a radiator fin 9 is inserted into the hot water storing tank 7. The hot water heated in the water jacket 3 is supplied to the hot water storing tank 7 so that the hot water in the hot water storing tank 7 and the heat of the hot water are utilized.

DE 102007063141 discloses a buildings heating device for heating a building by means of a liquid-cooled internal combustion engine driven by a heat pump and at least one heat storage for receiving heat energy whose heat storage housing surrounds the internal combustion engine. The heat storage comprises a heat-conducting partition to which forms the air surrounding the internal combustion engine.

### Description of the Invention

The main aim of the present invention is to provide a device for the cogeneration of electric energy and thermal energy which allows to increase the thermal efficiency by reducing the loss of heat compared to the devices of known type.

Within this aim, an object of the present invention is to provide a device for the cogeneration of electric and thermal energy which is flexible to use and easier to place compared to the devices of known type.

Another object of the present invention is to provide a device for the cogeneration of electric energy and thermal energy which allows to overcome the mentioned drawbacks of the prior art within the ambit of a simple, rational, easy and effective to use as well as affordable solution.

The above mentioned objects are achieved by the present device for the cogeneration of electric energy and thermal energy having the characteristics of claim 1.

The dependent claims 2-13 define preferred embodiments of the invention. Other described aspects which do not fall under the definition of the claims are not according to the invention but helpful for its understanding.

### Brief Description of the Drawings

Other characteristics and advantages of the present invention will become better evident from the description of a preferred, but not exclusive, embodiment of a device for the cogeneration of electric energy and thermal energy, illustrated by way of an indicative, but non-limiting, example in the accompanying drawings, wherein:

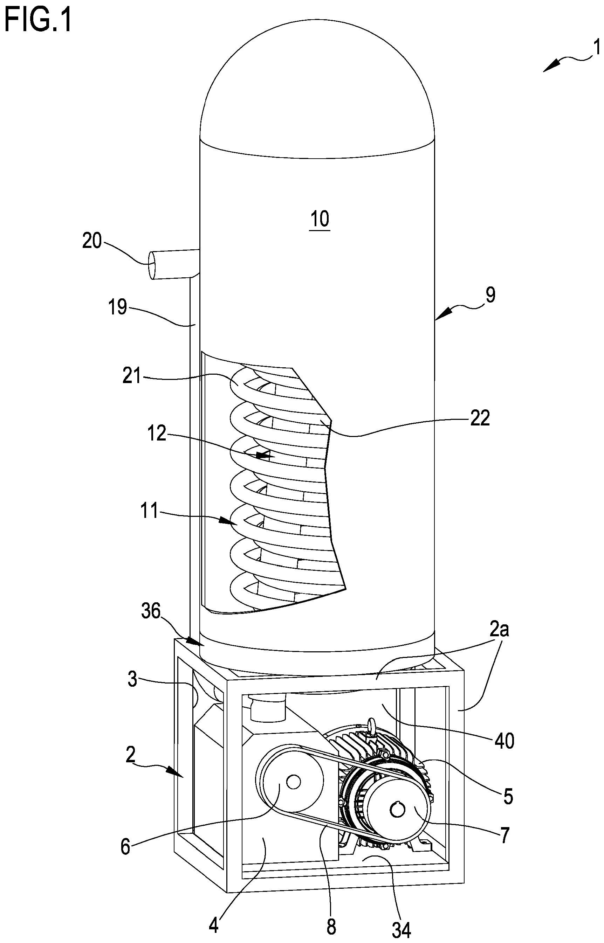

Figure 1 is an axonometric view of the device according to the invention;

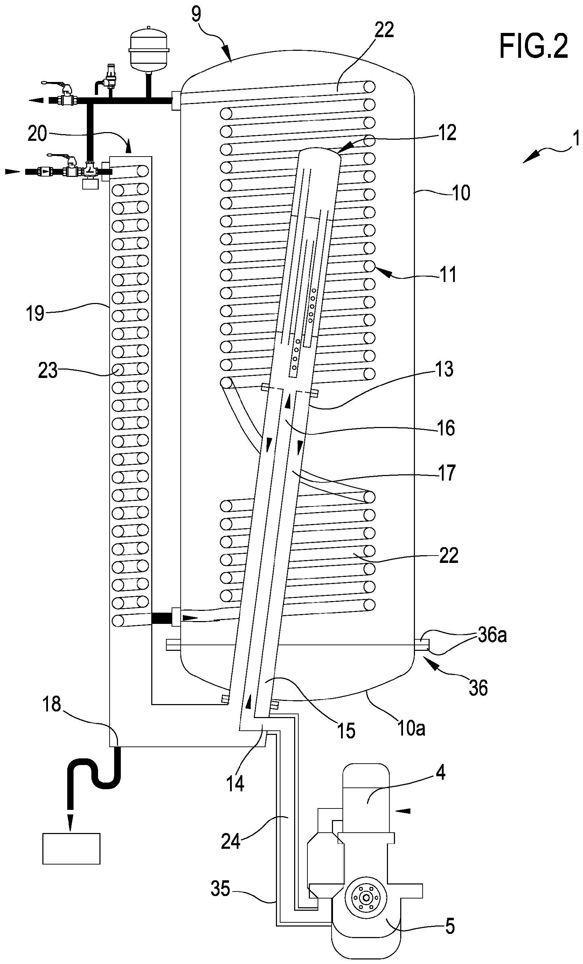

Figure 2 is a first schematic view of a detail of the device according to the invention in a first embodiment;
Figure 3 is a schematic view of the detail of Figure 2 in a second embodiment;

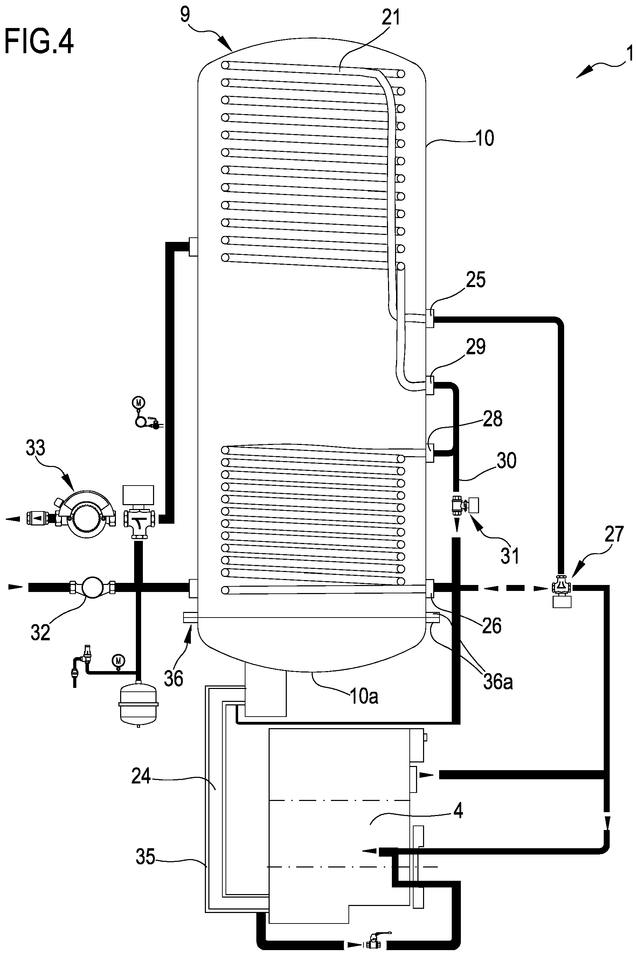

Figure 4 is a second schematic view of a detail of a device showing some further aspects not claimed in present invention;
Figure 5 is a schematic view of the detail of Figure 4 showing other aspects not claimed in present invention;
Figure 6 is a schematic representation of one part of the detail of Figure 5.

### Embodiments of the Invention

With particular reference to such illustrations, reference number 1 globally indicates a device for the cogeneration of electric energy and thermal energy.

The device 1 has a support frame 2, preferably made of a heat resistant rigid material.

In the present embodiment, the support frame 2 is made of a plurality of tubular elements 2a locked together so as to define a containment compartment 40. The frame 2 also has an opening 3 for accessing the compartment 40 and comprises at least a closing wall, not shown in detail in the illustrations, of the opening 3.

Preferably, the compartment 40 has a substantially parallelepiped shape and the access opening 3 is defined on at least one of the side walls of the compartment itself.

The device 1 also comprises a generator assembly 4, 5 having a motor element 4 and an alternator 5 operatively connected to one another.

In the present embodiment, the motor element 4 and the alternator 5 are arranged staggered relative to one another so as to facilitate the compactness of the generator assembly 4, 5.

Such generator assembly is able to produce in cogeneration thermal energy and electric energy, e.g. for home use.

The generator assembly 4, 5 is contained inside the compartment 40 and is mounted on board a supporting structure associated with the frame 2 and removable from this through the opening 3.

More in detail, the closing wall is movable between a closed configuration, wherein it blocks and thermoacoustically insulates the opening 3, and an open configuration, wherein it allows access to the opening itself and rests on the ground to define a ramp for the extraction of the supporting structure.

Such closing wall therefore has the dual function of plugging when the generator assembly 4, 5 is in operation and of ramp for the removal of the generator assembly itself in case of maintenance.

As illustrated in the figures, the generator assembly 4, 5 comprises a motion transfer system 6, 7, 8 from the motor element 4 to the alternator 5.

In particular, the motion transfer system 6, 7, 8 comprises a first pulley 6 associated with the motor element 4, a second pulley 7 associated with the alternator 5 and a belt element 8 able to connect kinematically the first pulley 6 to the second pulley 7.

This solution permits easily and cheaply changing the number of revolutions of the motor making flexible the power supply for the production of electric energy.

As mentioned above, the generator assembly 4, 5, furthermore, is mounted on board a supporting structure 34 associated with the frame 2 and removable from it. More in detail, the frame 2 has a bottom wall on which the supporting structure 34 of the generator assembly 4, 5 is arranged resting, the supporting structure having wheels able to allow it to be removed from the frame itself through the opening 3.

This way, by removing the generator assembly 4, 5, it is possible to operate directly on the motor element 4 or on the alternator 5 without necessarily disassembling and disconnecting the one from the other and, therefore, facilitating maintenance operations.

The removability of the supporting structure 34 also facilitates the assembly of the generator assembly 4, 5 outside the frame 2 and its subsequent insertion inside the compartment 40, which does not therefore require the use of equipment intended for lifting same.

The device 1 also has a thermal unit 9 able to accumulate the thermal energy produced by the generator assembly 4, 5 and able to facilitate a heat exchange between the heat transfer fluids.

The thermal unit 9, furthermore, is able to offset the different flow rates of the external user point, acting as a hydraulic separator, sludge remover and deaerator.

The generator assembly 4, 5 and the thermal unit 9 are both associated with the frame 2, with the generator assembly 4, 5 which is arranged below the thermal unit 9. The frame 2 thus supports in an autonomous way both the generator assembly 4, 5 and the thermal unit 9.

More in detail, the frame 2 defines a lower volume, inside which is housed the generator assembly 4, 5, and an upper volume (not shown in detail in the illustrations), within which the thermal unit 9 is fitted.

As can be seen from the illustrations, the thermal unit 9 rests on the frame 2, and more particularly on the tubular elements 2a which delimit the aforementioned lower volume at the top.

This way it is possible to recover most of the heat produced by the motor element 4 which would otherwise be dispersed by convection and radiation. According to the invention, the thermal unit 9 comprises at least a container casing 10 closed and under pressure, containing a first heat transfer fluid, and at least an exchanger assembly 11 contained at least partly inside the container casing 10 and able to exchange heat with the first heat transfer fluid. More in detail, the container casing 10 is of the closed-vessel type.

As illustrated in the figures, the container casing 10 and the frame 2 are associated by means of coupling means 36.

In the present embodiment the coupling means, altogether identified by the reference number 36, comprise at least two flanges 36a joining the upper portion of the container casing 10 to its lower portion. More in particular, these flanges 36a are defined in the proximity of the bottom 10a of the container casing 10. This allows facilitating the start-up of the exchanger assembly 11, maintenance operations and the use of container casings 10 of different sizes according to the heating requirements.

Since the container casing 10 is arranged above the frame 2, it follows that its bottom 10a is raised with respect to the bottom wall of the frame itself and, therefore, with respect to the ground.

The coupling means 36 also comprise clamping means of the flanges 36a, such as threaded parts not shown in detail in the illustrations, able to further fix the container casing 10 to the frame 2. Alternative solutions cannot however be ruled out such as, e.g., the welding together of the parts.

Preferably, the first heat transfer fluid is water, but the use of other fluids cannot be ruled out, such as diathermic oils or other fluids normally used to exchange heat.

The exchanger assembly 11 comprises a first heat exchanger 12 contained at least partly inside the container casing 10 and associated with the fume exhaust of the motor element 4.

The first heat exchanger 12 is configured to convey the exhaust fumes from the motor element 4 inside the container casing 10 to transfer heat to the first heat transfer fluid.

The first heat exchanger 12 comprises a first tubular element 13 communicating with the fume exhaust of the motor element 4.

The first tubular element 13 extends upwards inside the container casing 10 and comprises an inlet mouth 14 for the hot fumes communicating with the fume exhaust of the motor element 4 and at least an outlet mouth 15 for the cooled fumes communicating with the outside. The exhaust fumes enter through the inlet mouth into the first tubular element 13 and return back up inside it, exchanging heat with the first heat transfer fluid and, as they are gradually cooled, they are then conveyed towards the outlet mouth 15.

According to the invention, the first tubular element 13 comprises a first channel 16, defining the inlet mouth 14 and able to be crossed in an upward direction by the hot fumes from the motor element 4, and at least a second channel 17, separate from the first channel 16, defining the outlet mouth 15 and able to be crossed in a downward direction by the cooled fumes.

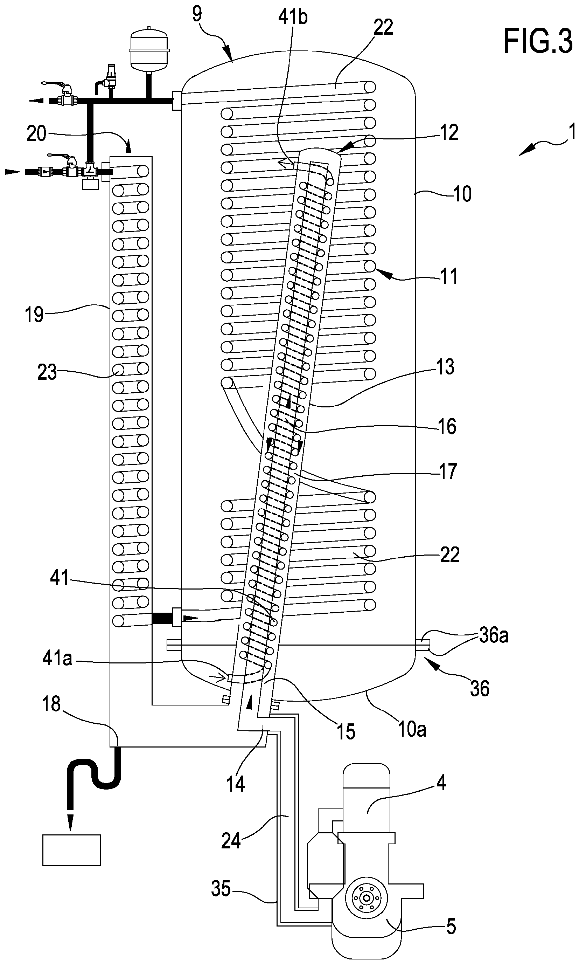

Advantageously, in the embodiment shown in figure 3, the first heat exchanger 12 comprises an auxiliary exchanger 41 arranged inside the first tubular element 13 and communicating with the container casing 10. The auxiliary exchanger 41 is therefore able to cause the first heat transfer fluid to circulate inside the first tubular element itself to take heat from the exhaust fumes flowing through it. More particularly, the auxiliary exchanger 41 is arranged inside the second channel 17 and wraps in a spiral fashion around the first channel 16.

In detail, the auxiliary exchanger 41 has an inlet 41a and an outlet 41b of the first heat transfer fluid, communicating with the container casing 10, where the outlet 41b is arranged at a greater height than the inlet 41a. The first heat transfer fluid, due to the heating effect caused by the heat exchange with the exhaust fumes, circulates in a natural way inside the auxiliary exchanger 41 moving upwards from the inlet 41a to the outlet 41b.

Preferably, the auxiliary exchanger 41 is of the type of a turbulator, i.e., a device able to create turbulence; in other words, its spiral conformation allows both increasing the turbulence of the fumes which lap it externally, and increasing the heat exchange efficiency, the exchange surface being equal. Advantageously, the first heat exchanger 12 comprises an outlet gap 18 for the condensate which forms following the cooling of the exhaust fumes flowing through the first tubular element 13.

The first heat exchanger 12 also comprises a second tubular element 19 arranged outside the container casing 10 and communicating with the outlet mouth 15 and defining an opening 20 communicating with the outside for the expulsion of the fumes.

The exchanger assembly 11 may also comprise a second heat exchanger 21 contained at least partly inside the container casing 10 and associated with the motor element 4.

The second heat exchanger 21 is configured to cause a work fluid to circulate for the cooling of the motor element in the container casing 10 to transfer heat to the first heat transfer fluid.

The work fluid is a fluid normally used to cool the parts of the internal combustion motor.

This way it is also possible to recover the heat coming from the inner parts of motor element 4 heated during its operation.

In the present embodiment, the second heat exchanger 21 is a tubular element which extends in a spiral fashion inside the container casing 10, so as to maximize the exchange surface and facilitate the transfer of heat between the heat transfer fluids.

Preferably, the work fluid runs through the second heat exchanger 21 from top to bottom.

More in detail, the second heat exchanger 21 comprises at least a first inlet port 25 and at least a first outlet port 26 of the work fluid. The first inlet port 25 and the first outlet port 26 are defined on the container casing 10, with the first inlet port 25 which is arranged at a greater height than the first outlet port 26. Although not claimed, the device 1 may comprise first valve means 27 connected at input to the first outlet port 26, to receive the cooled work fluid, and to the motor element 4, to receive the hot work fluid exiting from the motor element itself. At output, the first valve means 27 are connected to the first inlet port 25 and are operable to mix the work fluid coming from the second heat exchanger 21 and from the motor element 4 so as to modulate the temperature of the work fluid itself entering the second heat exchanger 21, preferably not higher than about 80°C.

The first valve means 27 also allow completely bypassing the heat exchanger 21, so as to reduce the heating times of the motor in the starting phase. Although not claimed, the device 1 may also comprise a second inlet port 28 and a second outlet port 29, arranged between the first ports 25, 26 and connected together by means of a by-pass channel 30 which is external to the container casing 10. The by-pass channel 30 is in turn connected to the motor element 4 and to the second valve means 31, which are operable to allow/prevent the flow of the work fluid towards the motor element itself. The actuation of the second valve means 31 allows to concentrate the thermal energy at the top of the container casing 10. The exchanger assembly 11 preferably comprises a third heat exchanger 22, also contained at least partly in the container casing 10 and connectable to at least an external user point.

In particular, the third heat exchanger 22 is configured to cause a second heat transfer fluid to be heated to circulate inside the container casing 10.

The second heat transfer fluid runs through the third heat exchanger 22 from bottom to top, in countercurrent therefore to the work fluid flowing through the second heat exchanger 21.

Usefully, the second heat transfer fluid is domestic water to be used in the heating systems of a home or other user points requiring hot water, e.g., of the industrial type. In particular, the second heat transfer fluid can also be of the type of a liquid for food use.

The third heat exchanger 22, shown in figure 3, is also a tubular element which extends in a spiral fashion inside the container casing 10 facilitating the exchange of heat between the heat transfer fluids.

Preferably, the exchanger assembly 11 also comprises a fourth heat exchanger 23 inserted inside the second tubular element 19 and intended to be crossed by a further fluid able to recover the residual heat from the fumes outflowing from the outlet mouth 15.

This way it is possible to recover additional heat from the outflowing fumes, increasing the thermal efficiency of the device 1.

Advantageously, the outlet of the fourth heat exchanger 23 is connected at input to the third heat exchanger 22, so as to facilitate the domestic hot water heating. In the present embodiment, the first heat exchanger 12 comprises a third tubular element 24 associated with the motor element 4 and arranged upstream of the first tubular element 13 in the direction of advancement of the exhaust fumes.

Preferably, the exchanger assembly 11 also comprises a fifth heat exchanger 35 arranged at the third tubular element 24 and able to be crossed by the work fluid exiting from the second heat exchanger 21 to allow the work fluid itself to heat at the work temperature of the motor element 4.

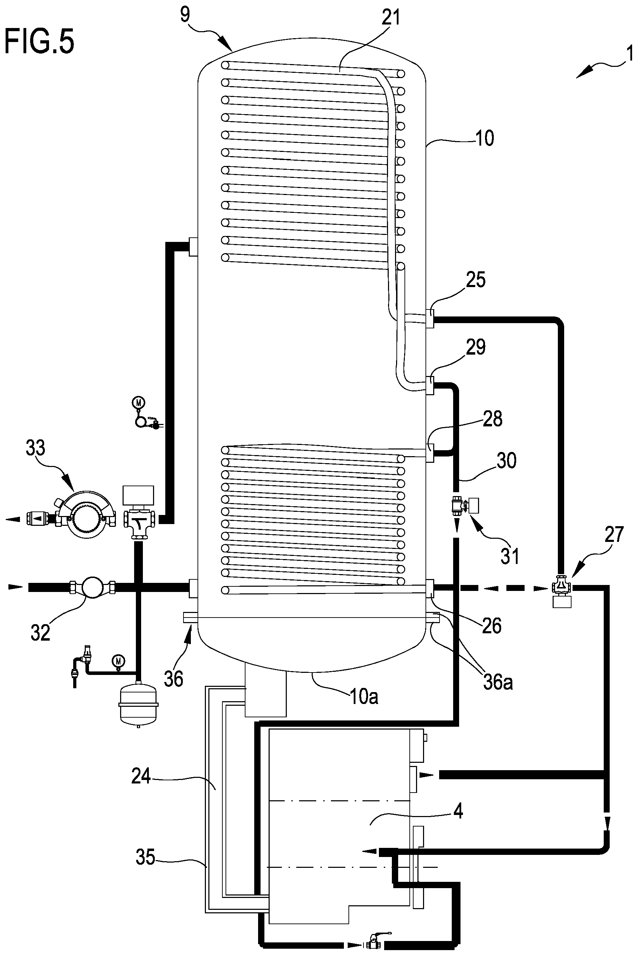

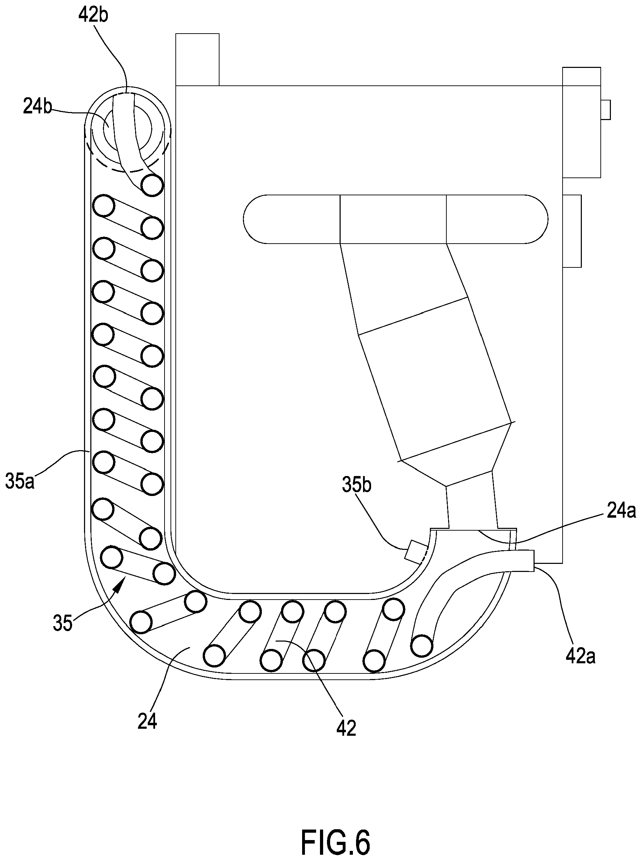

In the embodiment of Figure 5, the fifth heat exchanger 35 comprises a further tubular element 42 (shown in figure 6) arranged inside said third tubular element 24 and communicating on one side with the second heat exchanger 21, from which it receives at input the work fluid exiting from the same, and on the other side with the motor element 4. The work fluid which exits from the second heat exchanger 21 and flows through the further tubular element 42 therefore acquires heat by effect of the heat exchange with the exhaust fumes flowing through the third tubular element 24. In the embodiment shown in figure 6, the exhaust fume inlet and outlet mouths in the third tubular element 24 are identified by the reference numbers 24a and 24b respectively.

Preferably, the further tubular element 42 has a spiral shape, so as to facilitate the heat exchange with the fumes.

Suitably, the fifth heat exchanger 35 comprises at least a section 35a arranged outside the third tubular element 24 and placed between the further tubular element 42 and the motor element 4.

More in detail, the further tubular element 42 has an inlet gap 42a, through which the work fluid coming from the second heat exchanger 21 enters inside it, and an outlet gap 42b, through which the work fluid enters inside the section 35a, where the latter communicates with the motor element 4 through the mouth 35b.

More in detail, the second valve means 31 direct the outflow of the work fluid exiting from the second outlet port 29.

When these valve means allow the outflow through the by-pass channel 30, then the work fluid is conveyed directly into the fifth heat exchanger 35. Alternatively the valve means 31 do not allow the outflow through the by-pass channel 30 and the work fluid circulates through the second inlet port 28, exits from the first outlet port 26 and is conveyed into the fifth heat exchanger 35.

Although not claimed, the device 1 may have a system of adjustment sensors electronically connected to the valve means 27, 31 and to a control unit, for simplicity not shown in the illustrations, able to operate and adjust the operation of these adjustment parts. The control unit is also connected to a calorie counter sensor 32.

The calorie counter sensor 32 is positioned downstream of the external thermal user point and is able to monitor the thermal withdrawals of the same thermal user point with the aim of providing information to the control unit regarding the on and off cycles necessary for the perfect operation of the device 1. Finally, the control unit is connected to a circulator 33 and is able to regulate the flow rates to be supplied to the user point according to the requirements of the latter and according to the information which the system of sensors and the calorie counter sensor 32 sends to the control unit.

The operation of the device here described is as follows.

According to the requirements of the thermal user point and therefore to the information sent to the control unit, the start of the motor element 4 is commanded.

The fumes produced by the internal combustion process, having temperatures between 500°C and 600°C, are conveyed to the thermal unit 9.

Through the third tubular element 24 they release heat to the work fluid and enter the first tubular element 13 at a temperature between 150°C and 200°C. By means of the first tubular element 13 they enter the container casing 10 where they release heat to the first heat transfer fluid.

Subsequently, the cooled fumes are conveyed towards the second tubular element 19 where they release further heat to the fluid circulating in the fourth heat exchanger 23.

Finally, the fumes cooled this way exit from the device 1, with temperatures between 30°C and 70°C.

The condensate which forms with the cooling of the fumes is removed through the outlet gap 18.

The work fluid circulates in the motor element 4 and, cooling it, acquires heat. Coming out of the motor element 4, it is sent into the upper portion of the container casing 10 through the first inlet port 25, entering with a temperature of about 80°C.

Here it releases heat to the first heat transfer fluid, and returns towards the motor element 4.

If the second valve means 31 are closed, the work fluid proceeds towards the lower part of the container casing 10.

If the second valve means 31 are open, the work fluid is instead diverted towards the by-pass channel 30 and sent to the fifth heat exchanger 35 before entering the motor element 4.

The second heat transfer fluid, on the other hand, enters the container casing 10 and, circulating in the third heat exchanger 22, acquires heat until it reaches temperatures between 45°C and 75°C.

## Claims

1. Device (1) for the cogeneration of electric energy and thermal energy, comprising:
- a support frame (2);
- at least a generator assembly (4, 5) configured to produce thermal energy and electric energy and comprising at least a motor element (4) of the internal combustion type and at least an alternator (5) associated with said motor element (4);
- at least a thermal unit (9) configured to accumulate said thermal energy and to facilitate a heat exchange between heat transfer fluids;
wherein said generator assembly (4, 5) and said thermal unit (9) are both associated with said frame (2), and said generator assembly (4, 5) is arranged below said thermal unit (9),
said thermal unit (9) comprising at least a container casing (10) of the closed-vessel type and configured for being under pressure and containing a first heat transfer fluid, and at least an exchanger assembly (11) contained at least partly inside said container casing (10) and able to exchange heat with said first heat transfer fluid,
wherein said exchanger assembly (11) comprises a first heat exchanger (12) contained at least partly inside said container casing (10), associated with the fume exhaust of said motor element (4) and configured to convey the exhaust fumes from said motor element (4) inside said container casing (10) so to transfer heat from the exhaust fumes to the first heat transfer fluid,
and wherein said first heat exchanger (12) further comprises a first tubular element (13) communicating with the fume exhaust of said motor element (4) and which extends upwards inside said container casing (10),
said first tubular element (13) further comprises an inlet mouth (14) for the hot fumes communicating with the fume exhaust of said motor element (4) and at least an outlet mouth (15) for the cooled fumes communicating with the outside of the container casing (10),
**characterized by the fact that** said first tubular element (13) further comprises a first channel (16) defining said inlet mouth (14) and configured to be crossed in an upward direction by the hot fumes from said motor element (4), and at least a second channel (17), separate from said first channel (16), defining said outlet mouth (15) and configured to be crossed in a downward direction by the cooled fumes.

2. Device (1) according to claim 1, **characterized by** the fact that said exchanger assembly (11) comprises:
- a second heat exchanger (21) contained at least partly inside said container casing (10), associated with said motor element (4) and configured to cause a work fluid of said motor element (4) to circulate in said container casing (10) to transfer heat to the first heat transfer fluid;
- a third heat exchanger (22) contained at least partly in said container casing (10), connectable to at least an external user point and configured to cause a second heat transfer fluid to be heated to circulate in said container casing (10).

3. Device (1) according to claim 2, **characterized by** the fact that said first heat exchanger (12) comprises an auxiliary exchanger (41) arranged inside said first tubular element (13) and communicating with said container casing (10), said auxiliary exchanger (41) being configured to cause said first heat transfer fluid to circulate inside the first tubular element itself to take heat from the exhaust fumes flowing through it.

4. Device (1) according to claim 3, **characterized by** the fact that said auxiliary exchanger (41) is arranged inside said second channel (17).

5. Device (1) according to claim 3 or 4, **characterized by** the fact that said auxiliary exchanger (41) has an inlet (41a) and an outlet (41b) of the first heat transfer fluid, communicating with said container casing (10), where said outlet (41b) is arranged at a greater height than said inlet (41a).

6. Device (1) according to one or more of claims 3 to 5, **characterized by** the fact that said auxiliary exchanger (41) is of the type of a turbulator.

7. Device (1) according to one or more of the preceding claims, **characterized by** the fact that said first heat exchanger (12) comprises an outlet gap (18) for the condensate which forms following the cooling of the exhaust fumes flowing through said first tubular element (13).

8. Device (1) according to one or more of claims 1 to 7, **characterized by** the fact that said first heat exchanger (12) comprises at least a second tubular element (19) arranged outside said container casing (10), communicating with said outlet mouth (15) and defining an opening communicating with the outside for the expulsion of fumes.

9. Device (1) according to claim 8, **characterized by** the fact that it comprises at least a fourth heat exchanger (23) inserted inside said second tubular element (19) and configured so to be crossed by a further fluid able to recover the residual heat from the fumes outflowing from said outlet mouth (15).

10. Device (1) according to claim 9, **characterized by** the fact that said fourth heat exchanger (23) is connected at an input to said third heat exchanger (22).

11. Device (1) according to one or more of the preceding claims from 2 to 10, **characterized by** the fact that said first heat exchanger (12) comprises at least a third tubular element (24) associated with said motor element (4) and arranged upstream of said first tubular element (13) in the direction of advancement of the exhaust fumes, and by the fact that it comprises a fifth heat exchanger (35) arranged at said third tubular element (24) and configured to be crossed by the work fluid exiting from said second heat exchanger (21) to allow the work fluid to heat.

12. Device (1) according to claim 11, **characterized by** the fact that said fifth heat exchanger (35) comprises a further tubular element (42) arranged inside said third tubular element (24) and communicating on one side with said second heat exchanger (21), from which it receives at input the work fluid exiting from the same, and on the other side with said motor element (4).

13. Device (1) according to claim 12, **characterized by** the fact that said further tubular element (42) has a spiral shape.

## Patentansprüche

1. Vorrichtung (1) zur Erzeugung von elektrischer Energie und Wärme, umfassend:
- einen Tragrahmen (2);
- mindestens eine Generatoranordnung (4, 5), die ausgebildet ist Wärme und elektrische Energie zu erzeugen, und die mindestens ein Motorelement (4) des Verbrennungstyps und mindestens einen mit dem Motorelement (4) verbundenen Wechselstromgenerator (5) umfasst;
- mindestens eine thermische Einheit (9), die ausgebildet ist, die Wärme zu akkumulieren und einen Wärmeaustausch zwischen Wärmeübertragungsfluiden zu erleichtern;
wobei die Generatoranordnung (4, 5) und die thermische Einheit (9) beide dem Rahmen (2) zugeordnet sind und die Generatoranordnung (4, 5) unterhalb der thermischen Einheit (9) angeordnet ist,
wobei die thermische Einheit (9) mindestens ein Behältergehäuse (10), das von der Art eines geschlossenen Behälters und ausgebildet ist, dass es unter Druck stehen kann, und das ein erstes Wärmeübertragungsfluid enthält, und mindestens eine Tauscheranordnung (11) umfasst, die zumindest teilweise im Inneren des Behältergehäuses (10) enthalten ist und Wärme mit dem ersten Wärmeübertragungsfluid austauschen kann,
wobei die Tauscheranordnung (11) einen ersten Wärmetauscher (12) umfasst, der zumindest teilweise im Inneren des Behältergehäuses (10) enthalten ist, der dem Abgasauslass des Motorelements (4) zugeordnet und ausgebildet ist, die Abgase von dem Motorelement (4) in das Innere des Behältergehäuses (10) zu befördern, um Wärme von den Abgasen auf das erste Wärmeübertragungsfluid zu übertragen; und wobei der erste Wärmetauscher (12) ferner ein erstes röhrenförmiges Element (13) umfasst, das mit dem Abgas des Motorelements (4) in Verbindung steht und das sich innerhalb des Behältergehäuses (10) nach oben erstreckt,
das erste rohrförmige Element (13) ferner eine Einlassöffnung (14) für die heißen Abgase, die mit dem Abgasauslass des Motorelements (4) in Verbindung steht, und mindestens eine Auslassöffnung (15) für die gekühlten Abgase umfasst, die mit der Umgebung des Behältergehäuses (10) in Verbindung steht;
**dadurch gekennzeichnet, dass** das erste rohrförmige Element (13) ferner einen ersten Kanal (16), der die Einlassöffnung (14) definiert und ausgebildet ist, in einer Aufwärtsrichtung von den heißen Abgasen des Motorelements (4) durchquert zu werden, und mindestens einen zweiten Kanal (17) umfasst, der von dem ersten Kanal (16) getrennt ist und die Auslassöffnung (15) definiert und ausgebildet ist, in einer Abwärtsrichtung von den gekühlten Abgasen durchquert zu werden.

2. Vorrichtung (1) nach Anspruch 1, **dadurch gekennzeichnet, dass** die Tauscheranordnung (11) umfasst:
- einen zweiten Wärmetauscher (21), der zumindest teilweise innerhalb des Behältergehäuses (10) enthalten ist, dem Motorelement (4) zugeordnet und ausgebildet ist, ein Arbeitsfluid des Motorelements (4) zu veranlassen, in dem Behältergehäuse (10) zu zirkulieren, um Wärme an das erste Wärmeübertragungsfluid zu übertragen;
- einen dritten Wärmetauscher (22), der zumindest teilweise in dem Behältergehäuse (10) enthalten ist, der mit zumindest einem externen Benutzerpunkt verbindbar ist und der ausgebildet ist, ein zweites zu erwärmendes Wärmeübertragungsfluid zu veranlassen, in dem Behältergehäuse (10) zu zirkulieren.

3. Vorrichtung (1) nach Anspruch 2, **dadurch gekennzeichnet, dass** der erste Wärmetauscher (12) einen Hilfstauscher (41) umfasst, der innerhalb des ersten rohrförmigen Elements (13) angeordnet ist und mit dem Behältergehäuse (10) in Verbindung steht, wobei der Hilfstauscher (41) ausgebildet ist, das erste Wärmeübertragungsfluid zu veranlassen, innerhalb des ersten rohrförmigen Elements selbst zu zirkulieren, um Wärme von den Abgasen aufzunehmen, die durch dieses fließen.

4. Vorrichtung (1) nach Anspruch 3, **dadurch gekennzeichnet, dass** der Hilfstauscher (41) innerhalb des zweiten Kanals (17) angeordnet ist.

5. Vorrichtung (1) nach Anspruch 3 oder 4, **dadurch gekennzeichnet, dass** der Hilfstauscher (41) einen Einlass (41a) und einen Auslass (41b) des ersten Wärmeübertragungsfluids aufweist, die mit dem Behältergehäuse (10) in Verbindung stehen, wobei der Auslass (41b) in einer größeren Höhe als der Einlass (41a) angeordnet ist.

6. Vorrichtung (1) nach einem oder mehreren der Ansprüche 3 bis 5, **dadurch gekennzeichnet, dass** der Hilfstauscher (41) von der Art eines Turbulators ist.

7. Vorrichtung (1) nach einem oder mehreren der vorhergehenden Ansprüche, **dadurch gekennzeichnet, dass** der erste Wärmetauscher (12) einen Auslassspalt (18) für das Kondensat aufweist, das sich nach der Abkühlung der durch das erste rohrförmige Element (13) strömenden Abgase bildet.

8. Vorrichtung (1) nach einem oder mehreren der Ansprüche 1 bis 7, **dadurch gekennzeichnet, dass** der erste Wärmetauscher (12) mindestens ein zweites rohrförmiges Element (19) aufweist, das außerhalb des Behältergehäuses (10) angeordnet ist, mit der Auslassöffnung (15) in Verbindung steht und eine mit der Umgebung in Verbindung stehende Öffnung für den Ausstoß von Abgasen definiert.

9. Vorrichtung (1) nach Anspruch 8, **dadurch gekennzeichnet, dass** sie mindestens einen vierten Wärmetauscher (23) umfasst, der in das zweite rohrförmige Element (19) eingesetzt und ausgebildet ist, von einem weiteren Fluid durchströmt zu werden, das die Restwärme der aus der Auslassöffnung (15) ausströmenden Abgase rückgewinnen kann.

10. Vorrichtung (1) nach Anspruch 9, **dadurch gekennzeichnet, dass** der vierte Wärmetauscher (23) an einem Eingang mit dem dritten Wärmetauscher (22) verbunden ist.

11. Vorrichtung (1) nach einem oder mehreren der vorhergehenden Ansprüche 2 bis 10, **dadurch gekennzeichnet, dass** der erste Wärmetauscher (12) mindestens ein drittes rohrförmiges Element (24) umfasst, das dem Motorelement (4) zugeordnet ist und in Fließrichtung der Abgase stromaufwärts des ersten rohrförmigen Elements (13) angeordnet ist, und dass sie einen fünften Wärmetauscher (35) umfasst, der an dem dritten rohrförmigen Element (24) angeordnet und ausgebildet ist, von dem aus dem zweiten Wärmetauscher (21) austretenden Arbeitsfluid durchquert zu werden, um eine Erwärmung des Arbeitsfluids zu ermöglichen.

12. Vorrichtung (1) nach Anspruch 11, **dadurch gekennzeichnet, dass** der fünfte Wärmetauscher (35) ein weiteres rohrförmiges Element (42) umfasst, das innerhalb des dritten rohrförmigen Elements (24) angeordnet ist und auf einer Seite mit dem zweiten Wärmetauscher (21), von dem es eingangsseitig das aus diesem austretende Arbeitsfluid empfängt, und auf der anderen Seite mit dem Motorelement (4) in Verbindung steht.

13. Vorrichtung (1) nach Anspruch 12, **dadurch gekennzeichnet, dass** das weitere rohrförmige Element (42) eine Spiralform aufweist.

## Revendications

1. Dispositif (1) pour la cogénération d'énergie électrique et d'énergie thermique, comprenant :
- une armature (2) de support ;
- au moins un ensemble générateur (4, 5) configuré pour produire de l'énergie thermique et de l'énergie électrique et comprenant au moins un élément moteur (4) du type à combustion interne et au moins un alternateur (5) associé audit élément moteur (4) ;
- au moins une unité thermique (9) configurée pour accumuler ladite énergie thermique et pour faciliter un échange de chaleur entre des fluides de transfert de chaleur ;
dans lequel ledit ensemble générateur (4, 5) et ladite unité thermique (9) sont tous deux associés à ladite armature (2), et ledit ensemble générateur (4, 5) est agencé en dessous de ladite unité thermique (9),
ladite unité thermique (9) comprenant au moins un logement de contenant (10) du type récipient fermé et configuré pour être sous pression et contenant un premier fluide de transfert de chaleur, et au moins un ensemble échangeur (11) contenu au moins partiellement à l'intérieur dudit logement de contenant (10) et apte à échanger de la chaleur avec ledit premier fluide de transfert de chaleur,
dans lequel ledit ensemble échangeur (11) comprend un premier échangeur de chaleur (12) contenu au moins partiellement à l'intérieur dudit logement de contenant (10), associé à l'échappement de gaz dudit élément moteur (4) et configuré pour transporter les gaz d'échappement depuis ledit élément moteur (4) à l'intérieur dudit logement de contenant (10) de manière à transférer de la chaleur des gaz d'échappement au premier fluide de transfert de chaleur,
et dans lequel ledit premier échangeur de chaleur (12) comprend en outre un premier élément tubulaire (13) communiquant avec l'échappement de gaz dudit élément moteur (4) et qui s'étend vers le haut à l'intérieur dudit logement de contenant (10), ledit premier élément tubulaire (13) comprend en outre une embouchure d'entrée (14) pour les gaz chauds communiquant avec l'échappement de gaz dudit élément moteur (4) et au moins une embouchure de sortie (15) pour les gaz refroidis communiquant avec l'extérieur du logement de contenant (10),
**caractérisé par le fait que** ledit premier élément tubulaire (13) comprend en outre un premier canal (16) définissant ladite embouchure d'entrée (14) et configuré pour être traversé dans une direction vers le haut par les gaz chauds provenant dudit élément moteur (4), et au moins un second canal (17), séparé dudit premier canal (16), définissant ladite embouchure de sortie (15) et configuré pour être traversé dans une direction vers le bas par les gaz refroidis.

2. Dispositif (1) selon la revendication 1, **caractérisé par le fait que** ledit ensemble échangeur (11) comprend :
- un deuxième échangeur de chaleur (21) contenu au moins partiellement à l'intérieur dudit logement de contenant (10), associé audit élément moteur (4) et configuré pour amener un fluide de travail dudit élément moteur (4) à circuler dans ledit logement de contenant (10) pour transférer de la chaleur au premier fluide de transfert de chaleur ;
- un troisième échangeur de chaleur (22) contenu au moins partiellement dans ledit logement de contenant (10), pouvant être relié à au moins un point utilisateur externe et configuré pour amener un second fluide de transfert de chaleur à être chauffé pour circuler dans ledit logement de contenant (10).

3. Dispositif (1) selon la revendication 2, **caractérisé par le fait que** ledit premier échangeur de chaleur (12) comprend un échangeur auxiliaire (41) agencé à l'intérieur dudit premier élément tubulaire (13) et communiquant avec ledit logement de contenant (10), ledit échangeur auxiliaire (41) étant configuré pour amener ledit premier fluide de transfert de chaleur à circuler à l'intérieur du premier élément tubulaire lui-même pour prendre de la chaleur à partir des gaz d'échappement circulant à travers lui.

4. Dispositif (1) selon la revendication 3, **caractérisé par le fait que** ledit échangeur auxiliaire (41) est agencé à l'intérieur dudit second canal (17).

5. Dispositif (1) selon la revendication 3 ou 4, **caractérisé par le fait que** ledit échangeur auxiliaire (41) a une entrée (41a) et une sortie (41b) du premier fluide de transfert de chaleur, communiquant avec ledit logement de contenant (10), où ladite sortie (41b) est agencée à une plus grande hauteur que ladite entrée (41a).

6. Dispositif (1) selon une ou plusieurs des revendications 3 à 5, **caractérisé par le fait que** ledit échangeur auxiliaire (41) est du type turbulateur.

7. Dispositif (1) selon une ou plusieurs des revendications précédentes, **caractérisé par le fait que** ledit premier échangeur de chaleur (12) comprend un interstice de sortie (18) pour le condensat qui se forme suite au refroidissement des gaz d'échappement s'écoulant à travers ledit premier élément tubulaire (13).

8. Dispositif (1) selon une ou plusieurs des revendications 1 à 7, **caractérisé par le fait que** ledit premier échangeur de chaleur (12) comprend au moins un deuxième élément tubulaire (19) agencé à l'extérieur dudit logement de contenant (10), communiquant avec ladite embouchure de sortie (15) et définissant une ouverture communiquant avec l'extérieur pour l'expulsion de gaz.

9. Dispositif (1) selon la revendication 8, **caractérisé par le fait qu'**il comprend au moins un quatrième échangeur de chaleur (23) inséré à l'intérieur dudit deuxième élément tubulaire (19) et configuré de manière à être traversé par un autre fluide capable de récupérer la chaleur résiduelle à partir des gaz s'échappant de ladite embouchure de sortie (15).

10. Dispositif (1) selon la revendication 9, **caractérisé par le fait que** ledit quatrième échangeur de chaleur (23) est relié à une entrée audit troisième échangeur de chaleur (22).

11. Dispositif (1) selon une ou plusieurs des revendications précédentes de 2 à 10, **caractérisé par le fait que** ledit premier échangeur de chaleur (12) comprend au moins un troisième élément tubulaire (24) associé audit élément moteur (4) et agencé en amont dudit premier élément tubulaire (13) dans la direction de progression des gaz d'échappement, et **par le fait qu'**il comprend un cinquième échangeur de chaleur (35) agencé au niveau dudit troisième élément tubulaire (24) et configuré pour être traversé par le fluide de travail sortant dudit deuxième échangeur de chaleur (21) pour permettre au fluide de travail de chauffer.

12. Dispositif (1) selon la revendication 11, **caractérisé par le fait que** ledit cinquième échangeur de chaleur (35) comprend un autre élément tubulaire (42) agencé à l'intérieur dudit troisième élément tubulaire (24) et communiquant sur un côté avec ledit deuxième échangeur de chaleur (21), à partir duquel il reçoit à une entrée le fluide de travail sortant de celui-ci, et sur l'autre côté avec ledit élément moteur (4).

13. Dispositif (1) selon la revendication 12, **caractérisé par le fait que** ledit autre élément tubulaire (42) a une forme de spirale.
